# FASCICULE DE BREVET EUROPEEN

(11) **EP 2 969 705 B1**
(45) Date de publication et mention de la délivrance du brevet: **06.05.2020**
(21) Numéro de dépôt: 14705831.7
(22) Date de dépôt: 20.01.2014
(51) Int. Cl.: B62D 1/19

(54) **VEHICULE AUTOMOBILE COMPORTANT DES MOYENS DE POSITIONNEMENT D'UNE COLONNE DE DIRECTION RETRACTABLE**
KRAFTFAHRZEUG MIT MITTEL ZUR POSITIONIERUNG EINER ZUSAMMENSCHIEBBAREN LENKSÄULE
MOTOR VEHICLE COMPRISING MEANS FOR POSITIONING A COLLAPSIBLE STEERING COLUMN

(30) Priorité: 15.03.2013 FR 1352307
(43) Date de publication de la demande: 20.01.2016
(73) Titulaire: Renault S.A.S., 92100 Boulogne-Billancourt (FR)
(72) Inventeur: BRETON, Xavier, F-78280 Guyancourt (FR); LANARRE, Laurent, F-78170 La Celle Saint Cloud (FR)
(86) Numéro de dépôt international: PCT/FR2014/050098
(87) Numéro de publication internationale: WO 2014/140437

(56) Documents cités:
- EP-A2- 1 721 806
- DE-A1- 4 421 509
- US-A- 6 032 981
- US-A1- 2004 012 186

## Description

L'invention concerne un véhicule automobile.

L'invention concerne plus particulièrement un véhicule automobile comprenant une structure de caisse qui délimite au moins un habitacle et un compartiment avant séparés par une traverse transversale supérieure, ledit véhicule recevant une colonne de direction télescopique, qui est accouplée dans le compartiment moteur à un système de direction et qui s'étend dans l'habitacle en passant sous la traverse, ladite colonne de direction étant réglable en inclinaison entre deux positions angulaires extrêmes minimale et maximale, étant éventuellement réglable en longueur, et étant apte à être rétractée longitudinalement par un dispositif de sécurité en cas de choc.

On connaît de nombreux exemples de véhicule automobiles de ce type.

Dans un tel véhicule, la colonne de direction est susceptible d'une part d'être allongée ou rétractée d'autre part mue en inclinaison. Une telle colonne de direction peut ainsi occuper des positions extrêmes correspondant à des morphologies de passagers sortant des normes usuelles.

Dans ces positions extrêmes, et notamment dans certaines positions d'inclinaison, l'angle formé entre la colonne de direction et le plancher du véhicule ne permet pas une rétraction optimale de la colonne de direction par le dispositif de sécurité lorsque survient un choc, notamment le volant disposé à une extrémité supérieure de la colonne de direction peut entrer en contact avec un élément du poste de conduite et entraver ladite rétraction.

La non-rétractation de la colonne de direction du véhicule en cas de choc peut être source de lésions pour le conducteur du véhicule. A titre d'illustration de cet état de la technique, il est fait référence au document de brevet DE4421509 A1.

L'invention remédie à cet inconvénient en proposant un véhicule du type décrit précédemment comportant des moyens préalables de repositionnement de la colonne de direction selon une position permettant sa rétraction par le dispositif de sécurité en cas de choc.

Dans ce but, l'invention propose un véhicule automobile du type décrit précédemment, caractérisé en ce qu'il comporte des moyens de repositionnement angulaire de la colonne aptes à ramener la colonne de sa position d'inclinaison haute à une position angulaire déterminée d'inclinaison moindre, qui sont aptes à être activés au plus tard lors de la rétractation longitudinale de la colonne pour faciliter ladite rétractation.

Selon d'autres caractéristiques de l'invention :
- les moyens de positionnement angulaire sont synchronisés avec l'activation du dispositif de sécurité ;
- les moyens de positionnement angulaire comportent au moins un élément guidé qui est solidaire d'un tube de la colonne de direction et qui est apte à coopérer avec un moyen de guidage solidaire de la structure de caisse du véhicule ;
- le moyen de guidage est porté par la traverse ;
- l'élément guidé comporte un déflecteur qui est porté par une partie arrière supérieure du tube de la colonne de direction agencée en arrière de la traverse, et qui est conformé en surface inclinée tournée vers l'avant de la colonne de direction,
- le moyen de guidage porté par la traverse comporte une face d'appui, qui lèche la colonne de direction dans sa position d'inclinaison maximale, et qui est apte à repousser la colonne de direction vers le bas lorsque le déflecteur entre en contact avec ladite face d'appui quand la partie arrière du tube de la colonne de direction porteuse dudit déflecteur est rétractée longitudinalement sous ladite face d'appui ;
- la face d'appui est inclinée selon une pente égale à celle de la face inclinée du déflecteur ;
- la face d'appui est portée par un bord d'une platine plane fixée sous la traverse ;
- l'élément guidé comporte en arrière du déflecteur une surface parallèle à l'axe de la colonne de direction, pour permettre le guidage du tube de la colonne sous la platine plane lors de la rétractation de la colonne de direction.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un véhicule automobile selon l'invention ;
- la figure 2 est une vue en perspective représentant la position d'une colonne de direction selon l'invention par rapport aux moyens de positionnement angulaires dans une position angulaire d'inclinaison élevée ;
- la figure 3 est une vue en perspective représentant la colonne de direction de la figure 2 lors de sa rétractation longitudinale.

Dans la description qui va suivre, des chiffres et références identiques désignent des pièces identiques ou ayant des fonctions similaires.

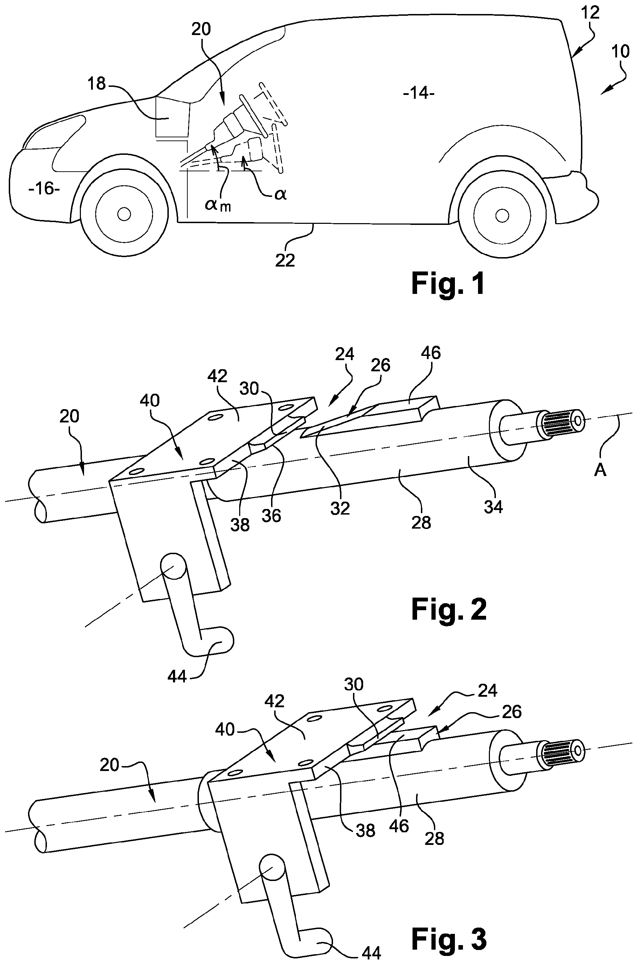

On a représenté à la figure 1 un véhicule automobile 10 comportant une structure de caisse 12 qui délimite au moins un habitacle 14 et un compartiment avant 16 séparés par une traverse transversale supérieure 18.

De manière connue, le véhicule 10 reçoit une colonne de direction télescopique 20 qui est accouplée dans le compartiment moteur à un système de direction (non représenté) et qui s'étend dans l'habitacle 14 en passant sous la traverse 18.

Comme on peut le voir sur la figure 1, la colonne de direction 20 est réglable en inclinaison rapport à un plancher 22 du véhicule, notamment entre deux positions angulaires extrêmes minimale et maximale dont on a représenté la position maximale "αₘ". La colonne de direction est ainsi susceptible d'occuper une pluralité de positions "α" d'inclinaison angulaire alpha par rapport audit plancher 22.

Par ailleurs, la colonne de direction télescopique 20 est susceptible plusieurs configurations de réglage en longueur comme représenté en traits pointillés sur la figure 1.

Cette conception connue en soi de l'état de la technique présente néanmoins un inconvénient lié à l'inclinaison de la colonne de direction télescopique 20.

En effet, dans sa position d'inclinaison maximale "αₘ", l'angle formé entre la colonne de direction 20 et le plancher 22 du véhicule nuit à la rétraction de la colonne 20 de par le fait par exemple que lors de la rétraction, un volant (non représenté) disposé à une extrémité haute de ladite colonne de direction vient en appui contre un élément du poste de conduite (non représenté) qui comprend la planche de bord et entrave ainsi la rétraction.

Ainsi, dans certains cas de chocs auxquels serait soumis le véhicule dans cette position, la colonne de direction 20 pourrait ne pas se rétracter et causer ainsi des lésions audit conducteur.

L'invention remédie à cet inconvénient en proposant des moyens de repositionnement de la colonne de direction favorisant sa rétractation en cas de choc.

Dans ce but, l'invention propose un véhicule automobile 10 du type décrit précédemment caractérisé en ce qu'il comporte des moyens 24 de positionnement de la colonne 20 apte à ramener la colonne de sa position d'inclinaison haute "αₘ" à une position angulaire déterminée d'inclinaison moindre et qui sont aptes à être activés au plus tard lors de la rétraction longitudinale de la colonne 20 de manière à faciliter ladite rétraction. On parlera de position d'inclinaison haute pour distinguer les positions d'inclinaison supérieure à la position angulaire déterminée optimale pour laquelle la rétraction est effectuée sur toute la course de rétraction sans rencontrer d'entrave sur le parcours.

Ces moyens de positionnement angulaires de la colonne pourraient prendre des formes nombreuses et variées.

En particulier, il serait parfaitement possible d'envisager un déplacement vertical de la colonne de direction 20 par l'intermédiaire d'un dispositif pyrotechnique commandé activé en cas de choc.

Néanmoins, l'invention a ceci d'avantageux qu'elle utilise de manière simple et efficace le mouvement de rétraction longitudinal de la colonne pour provoquer la remise en position angulaire de la colonne selon une inclinaison adéquate.

A cet effet, les moyens 24 de positionnement angulaire comportent au moins un élément guidé 26 qui est solidaire d'un tube 28 de la colonne de direction et qui est apte à coopérer avec un moyen de guidage 30 qui est solidaire de la structure de caisse du véhicule.

Dans l'invention, le moyen de guidage 30 est porté par un élément de la structure de caisse du véhicule présentant une rigidité élevée de manière à éviter que la rétractation de la colonne ne provoque le déplacement ou la déformation dudit moyen de guidage.

A cet effet, le moyen de guidage 30 est porté par la traverse 18 qui a été représentée à la figure 1.

Plus particulièrement, l'élément guidé 26 comporte un déflecteur 32 qui est porté par une partie arrière supérieure 34 du tube 28 de la colonne de direction 20 et qui est conformé en surface inclinée tournée vers l'avant de la colonne 20 de direction,

En effet, l'élément guidé étant destiné à coopérer avec le moyen de guidage 30 porté par la traverse, il est nécessaire que l'élément guidé 26 soit agencé en avant de la traverse 30 pour que la rétractation de la colonne 20 de direction amène ledit élément guidé 26 à coopérer avec le moyen de guidage 30.

Le moyen de guidage 30, porté par la traverse 18, comporte une face d'appui 36 qui lèche la colonne de direction 20, et plus particulièrement le tube 28 de la colonne de direction 20 dans la position d'inclinaison maximale de ladite colonne de direction 20.

Ainsi, le moyen de guidage 30 est apte à repousser la colonne de direction 20 vers le bas lorsque le déflecteur 32 entre en contact avec ladite face d'appui 36 quand la partie arrière 34 du tube 28 de la colonne 20 de direction, porteuse dudit déflecteur 32 est rétractée longitudinalement sous la face d'appui 30.

Lors du contact entre le moyen de guidage et le déflecteur, on observe des chocs dont les valeurs d'effort sont très importantes, *de l'ordre de 2000 N* qui peuvent nuire à la rétraction sans l'entraver.

La face d'appui peut prendre toute conformation.

Néanmoins, pour que le déflecteur 32 aborde la face d'appui 30 de manière aussi progressive que possible, la face d'appui 36 est de préférence inclinée selon une pente égale à celle de la surface inclinée du déflecteur 32.

De façon préférentielle, la surface de contact du déflecteur 32 est recouverte de matière plastique afin de réduire les chocs lors du contact et les frottements entre le moyen de guidage 30 et le déflecteur.

Avantageusement, pour assurer une rigidité optimale de la face d'appui 36, celle-ci est portée par un bord 38 d'une platine 40 dont une face 42 est fixée sous la traverse qui a été représentée précédemment en référence à la figure 1.

La platine 40 peut ainsi notamment servir à d'autres fonctions, comme porter les moyens de réglage de la colonne de direction 20 et, à cet effet, un levier de réglage 44 peut être porté également par la platine 40.

Enfin, pour assurer les guidages de l'élément guidé 26 sous le moyen de guidage 30 pendant toute la course de détractation de la colonne de direction 20, on remarquera que l'élément guidé 26 comporte, en arrière du déflecteur 32, une surface 46 qui est parallèle à l'axe "A" de la colonne de direction 20, cette surface 46 étant destinée à permettre le guidage du tube 28 de la colonne 20 sous la platine 40 lors de la rétraction de la colonne de direction 20.

L'invention permet donc avantageusement d'assurer un repositionnement d'une colonne 20 de direction réglable en inclinaison lors d'un choc afin d'en assurer une rétractation optimale.

## Revendications

1. Véhicule (10) automobile comprenant une structure (12) de caisse qui délimite au moins un habitacle (14) et un compartiment (16) avant séparés par une traverse transversale supérieure, ledit véhicule recevant une colonne (20) de direction avec un volant fixé à une extrémité haute de ladite colonne, qui est accouplée dans le compartiment moteur à un système de direction et qui s'étend dans l'habitacle (14) en passant sous la traverse (18), ladite colonne (20) de direction étant réglable en inclinaison entre deux positions angulaires extrêmes minimale et maximale (αₘ), étant apte à être rétractée longitudinalement par un dispositif de sécurité en cas de choc entrainant le volant vers un élément du poste de conduite qui comprend une planche de bord, le véhicule comportant des moyens (24) de positionnement angulaire de la colonne (20) aptes à ramener la colonne (20) de sa position d'inclinaison maximale à une position angulaire déterminée d'inclinaison moindre pour laquelle la rétraction est effectuée sur toute la course de rétraction sans rencontrer d'entrave du poste de conduite sur le parcours, qui sont aptes à être activés au plus tard lors de la rétractation longitudinale de la colonne (20) pour faciliter ladite rétractation, les moyens de positionnement angulaire étant synchronisés avec l'activation du dispositif de sécurité et comportant au moins un élément guidé (26) qui est solidaire d'un tube (28) de la colonne de direction et qui est apte à coopérer avec un moyen (30) de guidage,
**caractérisé en ce que** le moyen (30) de guidage solidaire de la structure de caisse du véhicule, est porté par la traverse (18) présentant une rigidité élevée de manière à éviter que la rétractation de la colonne ne provoque le déplacement dudit moyen de guidage.

2. Véhicule (10) automobile selon la revendication précédente, **caractérisé en ce que** :
- l'élément guidé (26) comporte un déflecteur (32) qui est porté par une partie arrière supérieure (34) du tube (28) de la colonne (20) de direction agencée en arrière de la traverse, et qui est conformé en surface inclinée tournée vers l'avant de la colonne (20) de direction,
- le moyen de guidage (30)porté par la traverse comporte une face d'appui (36), qui lèche la colonne (20) de direction dans sa position d'inclinaison maximale (αₘ), et qui est apte à repousser la colonne (20) de direction vers le bas lorsque le déflecteur (32) entre en contact avec ladite face d'appui (30) quand la partie arrière (34) du tube de la colonne de direction porteuse dudit déflecteur est rétractée longitudinalement sous ladite face d'appui (30).

3. Véhicule automobile (10) selon la revendication précédente, **caractérisé en ce que** la face d'appui (30) est inclinée selon une pente égale à celle de la surface inclinée du déflecteur (32).

4. Véhicule automobile (10) selon la revendication précédente, **caractérisé en ce que** la face d'appui (30) est portée par un bord d'une platine plane (40) fixée sous la traverse (18).

5. Véhicule automobile (10) selon la revendication précédente, **caractérisé en ce que** l'élément guidé (comporte en arrière du déflecteur (32) une surface parallèle à l'axe de la colonne de direction, pour permettre le guidage du tube (28) de la colonne (20) sous la platine plane (40) lors de la rétractation de la colonne (20) de direction.

## Patentansprüche

1. Kraftfahrzeug (10), welches eine Karosseriestruktur (12) umfasst, die wenigstens einen Fahrzeuginnenraum (14) und einen vorderen Raum (16) begrenzt, welche durch eine obere Quertraverse getrennt sind, wobei das Fahrzeug eine Lenksäule (20) mit einem an einem oberen Ende der Lenksäule befestigten Lenkrad aufnimmt, welche im Motorraum an ein Lenksystem gekoppelt ist und welche sich in den Fahrzeuginnenraum (14) erstreckt, wobei sie unter der Traverse (18) vorbeiführt, wobei die Lenksäule (20) zwischen zwei äußersten Winkelpositionen, einer minimalen und einer maximalen (αₘ), neigungsverstellbar ist, wobei sie im Fall eines Aufpralls durch eine Sicherheitsvorrichtung in Längsrichtung einziehbar ist, wobei sie das Lenkrad in Richtung eines Elements des Cockpits mitnimmt, welches ein Armaturenbrett umfasst, wobei das Fahrzeug Mittel (24) zur Winkelpositionierung der Lenksäule (20) aufweist, die geeignet sind, die Lenksäule (20) aus ihrer Position maximaler Neigung in eine bestimmte Winkelposition geringerer Neigung zurückzuholen, für welche das Einziehen auf dem gesamten Einziehweg erfolgt, ohne auf dem Weg auf ein Hindernis des Cockpits zu treffen, und die spätestens beim Einziehen der Lenksäule (20) in Längsrichtung aktivierbar sind, um das Einziehen zu erleichtern, wobei die Mittel zur Winkelpositionierung mit der Aktivierung der Sicherheitsvorrichtung synchronisiert sind und wenigstens ein geführtes Element (26) aufweisen, welches mit einem Rohr (28) der Lenksäule fest verbunden ist und welches geeignet ist, mit einem Führungsmittel (30) zusammenzuwirken,
**dadurch gekennzeichnet, dass** das Führungsmittel (30), das mit der Karosseriestruktur des Fahrzeugs fest verbunden ist, von der Traverse (18) getragen wird, die eine hohe Steifigkeit aufweist, um zu vermeiden, dass das Einziehen der Lenksäule die Verlagerung des Führungsmittels hervorruft.

2. Kraftfahrzeug (10) nach dem vorhergehenden Anspruch, **dadurch gekennzeichnet, dass**:
- das geführte Element (26) ein Ablenkelement (32) aufweist, welches von einem oberen hinteren Teil (34) des Rohres (28) der Lenksäule (20) getragen wird, der hinter der Traverse angeordnet ist, und welches als geneigte Fläche ausgebildet ist, die dem vorderen Teil der Lenksäule (20) zugewandt ist,
- das von der Traverse getragene Führungsmittel (30) eine Anlagefläche (36) aufweist, welche die Lenksäule (20) in ihrer Position maximaler Neigung (αₘ) berührt und welche geeignet ist, die Lenksäule (20) nach unten zurückzuschieben, wenn das Ablenkelement (32) mit der Anlagefläche (30) in Kontakt kommt, wenn der das Ablenkelement tragende hintere Teil (34) des Rohres der Lenksäule in Längsrichtung unter der Anlagefläche (30) eingezogen wird.

3. Kraftfahrzeug (10) nach dem vorhergehenden Anspruch, **dadurch gekennzeichnet, dass** die Anlagefläche (30) mit einer Neigung geneigt ist, die gleich derjenigen der geneigten Fläche des Ablenkelements (32) ist.

4. Kraftfahrzeug (10) nach dem vorhergehenden Anspruch, **dadurch gekennzeichnet, dass** die Anlagefläche (30) von einem Rand einer ebenen Platte (40) getragen wird, die unter der Traverse (18) befestigt ist.

5. Kraftfahrzeug (10) nach dem vorhergehenden Anspruch, **dadurch gekennzeichnet, dass** das geführte Element hinter dem Ablenkelement (32) eine zur Achse der Lenksäule parallele Fläche aufweist, um die Führung des Rohres (28) der Lenksäule (20) unter der ebenen Platte (40) während des Einziehens der Lenksäule (20) zu ermöglichen.

## Claims

1. Motor vehicle (10) comprising a bodyshell structure (12) which delimits at least one passenger compartment (14) and one front compartment (16) that are separated by an upper transverse cross member, said vehicle having a steering column (20) with a steering wheel attached to a top extremity of the said column that is coupled in the engine compartment to a steering system and that extends into the passenger compartment (14) by passing under the cross member (18), said steering column (20) being adjustable in inclination between extreme minimum and maximum angular positions (αₘ), and being collapsible longitudinally by a safety device in the event of an impact driving the steering wheel towards an element in the driver's compartment which includes a dashboard, the vehicle including means (24) for angularly positioning the column (20) that can move the column (20) from the maximum inclined position of same to a given, less inclined angular position for which the collapse is effected along the entire collapse path without encountering any obstruction to the driver's compartment en route, which can be activated no later than the time of longitudinal collapse of the column (20) to facilitate said collapse, the angular positioning means being synchronized with activation of the safety device and including at least one guided element (26) that is rigidly connected to a tube (28) of the steering column and that can cooperate with guide means (30), **characterized in that** the guide means (30) rigidly connected to the bodyshell structure of the vehicle are carried on the cross member (18) with a high degree of rigidity to prevent collapse of the column from causing said guide means to be moved.

2. Motor vehicle (10) according to the preceding claim, **characterized in that**:
- the guided element (26) comprises a deflector (32) that is carried on the upper rear portion (34) of the tube (28) of the steering column (20) arranged behind the cross member, and which forms an inclined surface oriented towards the front of the steering column (20),
- the guide means (30) carried on the cross member include a bearing face (36), which slides against the steering column (20) in the maximum inclined position (αₘ) of same, and that is able to push the steering column (20) downwards when the deflector (32) comes into contact with said bearing face (30) when the rear portion (34) of the tube of the steering column carrying said deflector is collapsed longitudinally beneath said bearing face (30).

3. Motor vehicle (10) according to the preceding claim, **characterized in that** the bearing face (30) is inclined at an angle equal to the angle of the inclined face of the deflector (32).

4. Motor vehicle (10) according to the preceding claim, **characterized in that** the bearing face (30) is carried on an edge of a flat plate (40) attached beneath the cross member (18).

5. Motor vehicle (10) according to the preceding claim, **characterized in that** behind the deflector (32), the guided element has a surface parallel to the axis of the steering column to enable the tube (28) of the column (20) to be guided beneath the flat plate (40) when the steering column (20) is collapsed.
